(19)

**Europäisches Patentamt**

**European Patent Office**

**Office européen des brevets**

(11) **EP 4 776 534 A1**

(12) **EUROPEAN PATENT APPLICATION**

(43) Date of publication:
**15.07.2026 Bulletin 2026/29**

(21) Application number: **25150703.4**

(22) Date of filing: **08.01.2025**

(51) International Patent Classification (IPC):
*H04J 3/06* (2006.01)      *H04L 12/40* (2006.01)
*H04Q 9/00* (2006.01)      *H04W 56/00* (2009.01)
*B60W 50/00* (2006.01)

(52) Cooperative Patent Classification (CPC):
**H04J 3/0638; B60W 50/0098; H04L 12/12;
H04W 56/002;** B60W 2520/105; B60W 2556/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bayerische Motoren Werke
Aktiengesellschaft
80809 München (DE)**

(72) Inventor: **Ghanem, Nabil
81245 München (DE)**

(54) **METHOD AND SYSTEM FOR SYNCHRONIZING AN INTERNAL TIME OF A VEHICLE WITH
TIMES OF FURTHER ENTITIES**

(57) The present disclosure relates to synchronizing an internal time of an automotive control unit in a vehicle with one or more further times of one or more further entities. One or more internal motion parameter indicators are compared to one or more further motion parameters. Each internal motion parameter indicator is associated with an internal time stamp based on the internal time of the automotive control unit while each further motion parameter is associated with a further time stamp based on the further time of the corresponding further entity. Then, one or more time offsets between the internal time stamp and the one or more further time stamps are determined based on the comparison. Finally, the internal time is synchronized with the one or more further times based on the one or more time offsets.

Processed by Luminess, 75001 PARIS (FR)

**Description**

TECHNICAL FIELD

The invention generally relates to synchronizing the internal time of an automotive control unit of a vehicle and more precisely to synchronizing the internal time of the automotive control unit with further entities within the vehicle and/or further entities outside of the vehicle.

BACKGROUND

Modern vehicles typically include multiple automotive control units, which may also be referred to as electronic control units (ECUs), which may all keep their respective internal time, e.g. based on an internal clock generator. Each of these automotive control units may need to maintain the respective internal time synchronized with one or more further entities, e.g. in order to align sensor data captured by the vehicle in the time domain or in order to correlate positional data received from a global navigation satellite system (GNSS) with the automotive sensor data. Accordingly, the further entities may be other automotive control units of the vehicle, in which case the time synchronization may be referred to as intra-vehicle time synchronization. The further entities may instead or in addition be other vehicles, e.g. in V2V communication, traffic infrastructure, e.g. in V2I communication, or data sources, such as mobile communications networks or a global navigation satellite system (GNSS), in which case the time synchronization may be referred to as inter-vehicle synchronization or V2X synchronization.

To achieve the time synchronization within a vehicle and/or with further entities outside the vehicle, synchronization algorithms based on the communication between the various entities may be used, such as the Ethernet Precise Timing Control Protocol (PTP) combined with additional safety monitoring algorithms. However, this approach may not provide the safety level of synchronization required in automotive applications and may be costly to adapt to automotive requirements.

Therefore, it is an object of the present disclosure to provide time synchronization between an automotive control unit and one or more further entities in a manner adapted to automotive requirements.

SUMMARY OF THE INVENTION

To achieve this objective, the present disclosure provides a method for synchronizing an internal time of an automotive control unit in a vehicle with one or more further times of one or more further entities. The method comprises obtaining, at the automotive control unit, at least one internal motion parameter indicator and a corresponding internal time stamp based on the internal time. Each internal motion parameter indicator is indicative of a motion parameter of the vehicle. The method further comprises obtaining, from one or more of the one or more further entities, one or more further motion parameter indicators and corresponding one or more further time stamps. Each further motion parameter indicator is indicative of the motion parameter of the vehicle and/or a corresponding motion parameter of at least one of the one or more further entities. Each further time stamp is based on a corresponding one of the one or more further times. The method further comprises determining one or more time offsets between the internal time stamp and the one or more further time stamps based on the at least one internal motion parameter indicator and the one or more further motion parameter indicators. Finally, the method comprises synchronizing the internal time with the one or more further times based on the one or more time offsets.

The present disclosure further provides a corresponding automotive control unit and a vehicle comprising the automotive control unit.

BRIEF DESCRIPTION OF THE DRAWINGS

Examples of the present disclosure will be described with reference to the following appended drawings, in which like reference signs refer to like elements.

Fig. 1 illustrates synchronizing the internal time between various automotive control units within a vehicle as well as synchronizing the internal time of the vehicle with further entities according to examples of the present disclosure.

Fig. 2 shows a flowchart of a method for synchronizing an internal time of an automotive control unit in a vehicle with one or more further times of one or more further entities according to examples of the present disclosure.

Fig. 3 illustrates a vehicle according to examples of the present disclosure.

Fig. 4 illustrates an automotive control unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

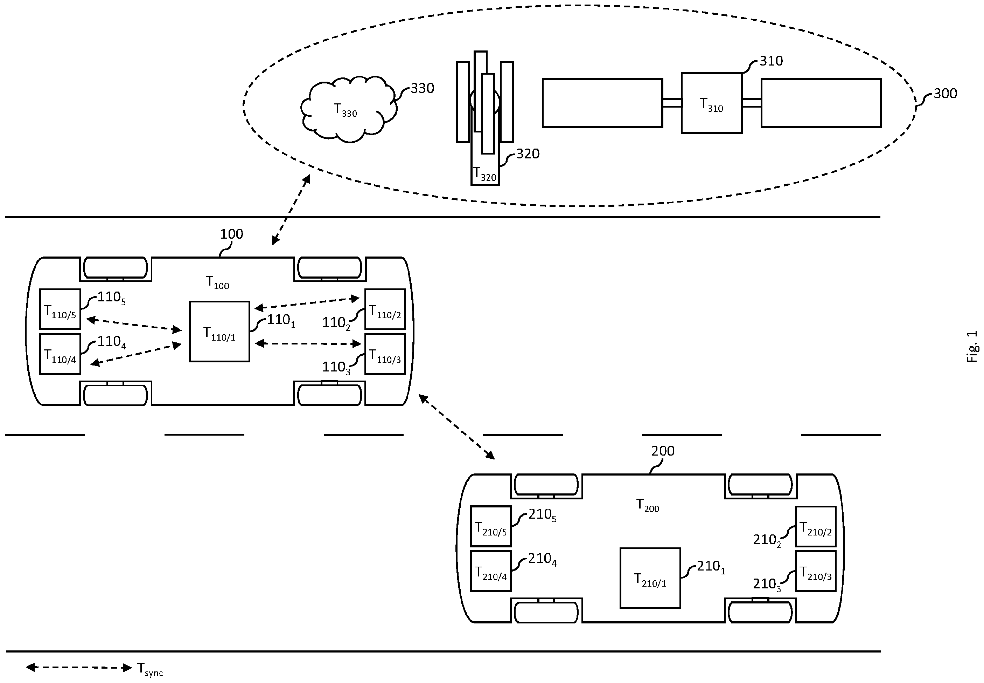

The present disclosure provides a method, an automotive control unit and a vehicle configured to synchronize times between an automotive control unit of a vehicle and one or more further entities. The one or more further entities may be other automotive control units inside the same vehicle, in which case the method serves to perform intra vehicle time synchronization. The one or more further entities may be entities outside of the vehicle, such as another vehicle or a data source, in which case the method serves to perform inter vehicle time synchronization. The method may also serve to perform both intra and inter vehicle time synchronization, i.e. synchronization between one or more automotive control units within the vehicle and one or more further entities, such as one or more other vehicles and/or one or more data sources. The various types of time synchronization provided by the present disclosure are illustrated in Fig. 1.

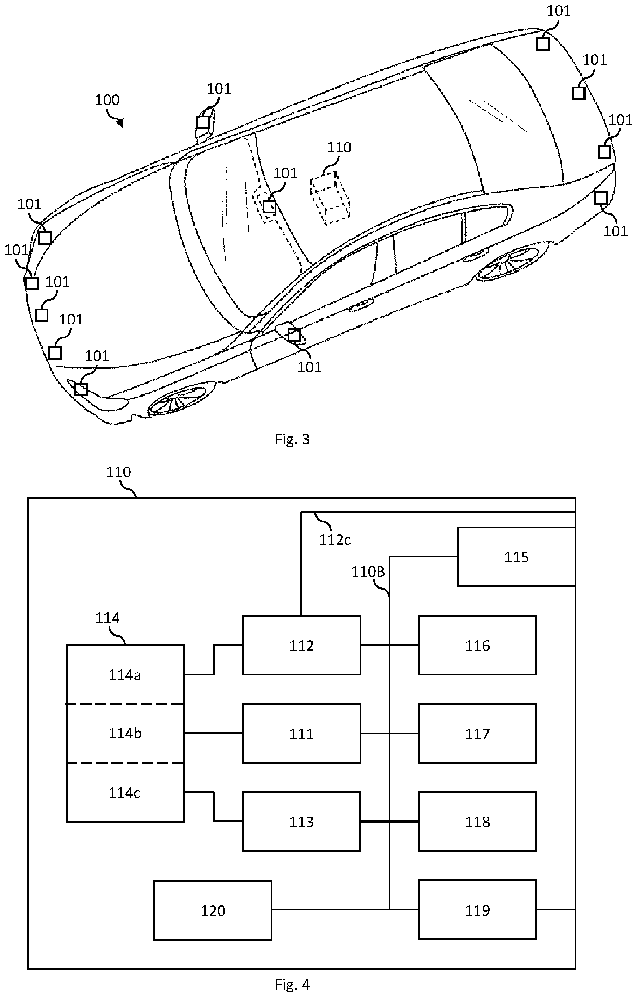

Fig. 1 shows a vehicle 100, a further vehicle 200 and a data source 300. Vehicle 100 as also further illustrated in Fig. 3, may include automotive control units $110_1$ to $110_5$, which respectively have an automotive control unit time $T_{110/1}$ to $T_{110/5}$. Likewise, further vehicle 200 may include automotive control units $210_1$ to $210_5$, which respectively have an automotive control unit time $T_{210/1}$ to $T_{210/5}$. It will be understood that Fig. 1 only shows one further vehicle 200 for simplification purposes. The road on which vehicle 100 drives in Fig. 1 may be used by any number of further vehicles 200.

Each automotive control unit $110_1$ to $110_5$ may be a separate control unit, i.e. a control unit configured to perform control of vehicle functionality based on input from other automotive control units or other entities within vehicle 100 or further vehicle 200, respectively, such as a control unit configured to perform one or more driving automation system features enabling one or more driving automation functionalities of any one of levels 1 to 5 of driving automation as defined in the taxonomy of driving automation of standard J3016 of SAE International or a control unit configured to control an engine, such as an electric engine or an internal combustion engine. Each automotive control unit may be integrated with some specific functionality, such as with automotive sensors 101 configured to capture automotive sensor data in order to process or pre-process automotive sensor data captured by automotive sensors 101. In other words, each automotive control unit may be a standalone control unit or may be integrated with other functionality and may accordingly be configured to perform general control, specific control of a functionality or processing or pre-processing of data of vehicle 100 or further vehicle 200, respectively. The internal structure of automotive control units $110_1$ to $110_5$ and $210_1$ to $210_5$ will be discussed in detail with reference to Fig. 4.

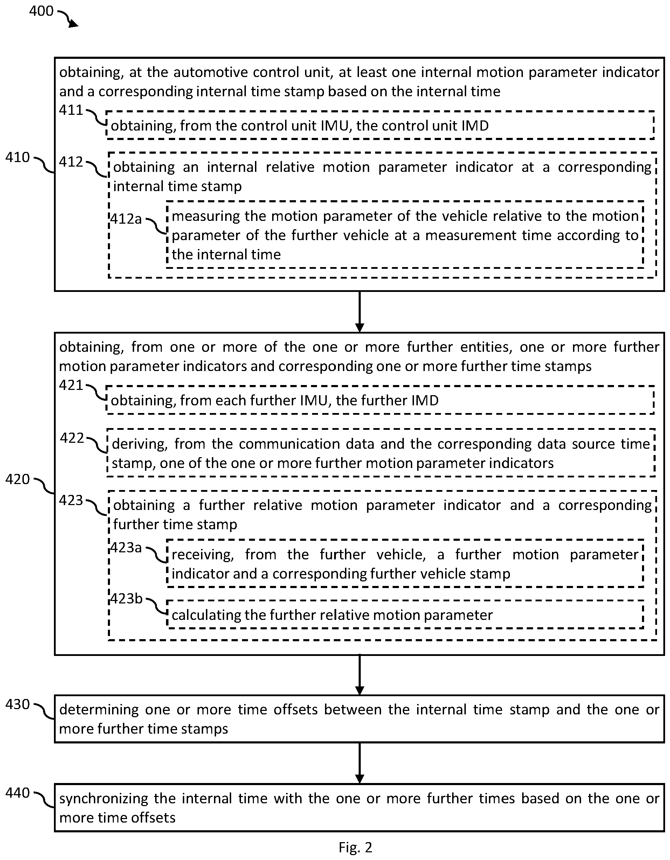

Automotive control unit times $T_{110/1}$ to $T_{110/5}$ and automotive control unit times $T_{210/1}$ to $T_{210/5}$ refer to the time respectively kept by automotive control units $110_1$ to $110_5$ and $210_1$ to $210_5$, e.g. based on an oscillator and a real time clock integrated circuit. In the context of the present disclosure, any one of automotive control unit times $T_{110/1}$ to $T_{110/5}$ may be referred to as the internal time synchronized with one or more further times by the present disclosure. That is, the present disclosure and thus the method subsequently discussed with reference to Fig. 2 may be deployed by any one of automotive control units $110_1$ to $110_5$ in order to synchronize their respective automotive control unit times $T_{110/1}$ to $T_{110/5}$ with one or more further times of one or more further entities.

In view of the above-discussed intra and/or inter vehicle time synchronization, the one or more further times of one or more further entities in the context of the present disclosure may refer to the time of any entity a given automotive control unit may communicate with, such as the automotive control unit times of other automotive control units within vehicle 100, one of the automotive control unit times $T_{210/1}$ to $T_{210/5}$ of the automotive control units $210_1$ to $210_5$ of further vehicle 200, a vehicle time $T_{200}$ of further vehicle 200 or a time of a data source 300. In the smallest use case example of the time synchronization in accordance with the present disclosure in the context of the example of Fig. 1, any one of automotive control unit times $T_{110/1}$ to $T_{110/5}$ may be synchronized with any one of the other automotive control unit times $T_{110/1}$ to $T_{110/5}$. In the largest use case example of the time synchronization in accordance with the present disclosure in the context of the example of Fig. 1, any one of automotive control unit times $T_{110/1}$ to $T_{110/5}$ may be synchronized with all other times shown in Fig. 1 in order to achieve a global synchronized time, e.g. in V2X communication.

It will thus be understood that further entity in the context of the present disclosure may refer to any entity a given automotive control unit may communicate with and with which the given automotive control unit may need to synchronize its internal time with. While in the above discussion of intra vehicle time synchronization further automotive control units were used as examples of further entities, it will be understood that any one of the exemplary further automotive control units $110_1$ to $110_5$ of Fig. 1 may be integrated with automotive sensors or other devices of vehicle 100 or may be considered the control circuitry thereof. Accordingly, the expression further entity may in the context of intra vehicle time synchronization refer to any device within vehicle 100 which keeps its own time and with which a given automotive control unit synchronizing its time may communicate with. Likewise, the expression further entity in the context of inter vehicle communication may refer to any device outside of vehicle 100, such as further vehicle 200 or data source 300, which keeps its own time and with which a given automotive control unit synchronizing its time may communicate with. It will thus be understood that inter vehicle time synchronization may not necessarily refer to synchronization solely between vehicles but also between vehicle 100 and data source 300 or vehicle 100 and infrastructure elements (not shown in Fig. 1).

Data source 300 may be any kind of source of data, such as communication data or positional data, having its own time, either by keeping its own time or by being provided with a time of a network or other system to which data source 300 provides access to. For example, data source 300 may be a global navigational satellite system (GNSS) 310 with a GNSS time $T_{310}$, an access node 320 of a mobile communications network with a communications network time $T_{320}$ or a data server 330 with a server time $T_{330}$.

In Fig. 1, dashed arrows indicate possible time synchronizations $T_{sync}$. In terms of intra vehicle time synchronization, Fig. 1 illustrates time synchronization between automotive control unit $110_1$ and automotive control units $110_2$ to $110_5$ as an example. It will be understood that time synchronizations $T_{sync}$ may be illustrated between any conceivable set of automotive control units $110_1$ to $110_5$. In terms of inter vehicle time synchronization, Fig. 1 illustrates time synchronization $T_{sync}$ generally between vehicle 100 and further vehicle 200, which may more specifically refer to any time synchronization between a general vehicle time $T_{100}$ of vehicle 100 and/or any one of automotive control unit times $T_{110/1}$ to $T_{110/5}$ and vehicle time $T_{200}$ and/or any one of automotive control unit times $T_{210/1}$ to $T_{210/5}$. Further, Fig. 1 illustrates inter vehicle time synchronization generally between vehicle 100 and data source 300, which may more specifically refer to any time synchronization between a general vehicle time $T_{100}$ of vehicle 100 and/or any one of automotive control unit times $T_{110/1}$ to $T_{110/5}$ and any one of data source times $T_{310}$ to $T_{330}$.

To synchronize the internal time of a given automotive control unit, such as of example automotive control units $110_1$ to $110_5$, with one or more further times of one or more further entities, the time synchronization approach according to the present disclosure compares one or more internal motion parameter indicators and their corresponding time stamps based on the internal time with one or more further motion parameter indicators of one or more further entities and their corresponding time stamps based on or more further times. Based on the comparison, the time synchronization approach according to the present disclosure determines the time offset between the internal times and the one or more further times. Finally, the time synchronization approach according to the present disclosure synchronizes the internal time with the one or more further times based on the one or more time offsets. That is, the time synchronization approach according to the present disclosure is based on the determination of the time offsets based on the comparison of motion parameter indicators.

The internal motion parameter indicators are indicative of a motion parameter of vehicle 100. Regarding the one or more further motion parameter indicators, the motion parameter they are indicative of depend on the type of time synchronization to be performed. If the time synchronization to be performed is intra vehicle time synchronization, the one or more further motion parameter indicators are indicative of the motion parameter of vehicle 100. If the time synchronization to be performed is inter vehicle time synchronization, the one or more further motion parameter indicators are at least indicative of the motion parameter of vehicle 100 and may further be indicative of a motion parameter of at least one of the one or more further entities. That is, in some examples of the present disclosure, the one or more further motion parameter indicators may include motion parameter indicators indicative of the motion parameter of vehicle 100, motion parameter indicators indicative of the motion of one or more further entities, such as one or more further vehicles 200, and/or motion parameter indicators indicative of the motion parameter of vehicle 100 relative to the corresponding motion parameters of one or more further entities, such as one or more further vehicles 200.

The motion parameter may be any parameter indicative of the motion of vehicle 100 and of the motion of one or more further entities. To this end, the motion parameter may be an acceleration of vehicle 100 and the further entities. It will however be understood that the motion parameter may also be the velocity or any other motion parameter of vehicle 100 and the one or more further entities.

The internal motion parameter indicators as well as the one or more further motion parameter indicators may include motion parameter indicators which in some examples of the present disclosure may be directly indicative of the respective motion parameters. In some examples of the present disclosure, the internal motion parameter indicators as well as the one or more further motion parameter indicators may include motion parameter indicators may be signal from which the motion parameters may be derived.

For example, each automotive control units $110_1$ to $110_5$ may include a respective inertial measurement unit (IMUs), which may be referred to as a control unit IMU. Further, each vehicle 200 may generally include an IMU, which may be referred to as a further vehicle IMU. Each IMU may be configured to capture a specific force, angular rate, and/or the orientation of each automotive control units $110_1$ to $110_5$ and of each further vehicle 200, respectively, using one or more accelerometers and/or gyroscopes. The data captured by each IMU may be referred to as inertial measurement data (IMD), which may e.g. be a 6 degrees of freedom (DoF) signal indicative of the six degrees of freedom of automotive control units $110_1$ to $110_5$ and of one or more further vehicle 200, i.e. the velocity in each of the x, y and z direction as well as the corresponding rotation, i.e. yaw, pitch and roll. From this 6 DoF signal, i.e. the IMD, the respective motion parameter may be derived. Accordingly, the IMD may be considered as an internal motion parameter indicator or further motion parameter indicator, depending on the location of the IMU.

Further, if the one or more further entities include one or more data sources 300, the further motion parameter indicators may be derived from communication data exchanged between the automotive control unit and the one or more data sources 300. For example, a further motion parameter indicator motion parameter indicator indicative of the motion parameter of vehicle 100 may be derived from the communication data based on the Doppler effect, the code phase or the carrier phase.

In summary the internal motion parameter indicator and the one or more further motion parameter indicators may be directly indicative of the respective motion parameter, e.g. by measuring or determining the respective motion parameter, or may be a signal from which the motion parameter may be derived, e.g. a 6 DOF signal /IMD or communication data.

Thus, the present disclosure provides inter and intra vehicle time synchronization based on corresponding motion parameters of vehicle 100 and further entities, such as one or more vehicles 200 and one or more data sources 300 instead of relying on communication protocol-based algorithms and protocols. By basing the time synchronization on motion parameters, which may be typically measured in any case during operation of vehicle 100 and the one or more further entities, processing overhead may be reduced. Further, the time synchronization is accordingly based on the fact that the observed motion parameter of vehicle 100 and in some cases of one or more further vehicle 200, such as the acceleration, is used as the reference point for the time synchronization, which ensures the safety level of the time synchronization required in automotive applications.

The inter and intra vehicle time synchronization in accordance with the above discussion will now be discussed in more detail with regard to the flow chart of Fig. 2, which shows method 400 for synchronizing the internal time of an automotive control unit, such as any one of automotive control units $110_1$ to $110_5$, in vehicle 100 with one or more further times of one or more further entities, such a one or more further vehicles 200 and/ or one or more data sources 300.

In Step 410, method 400 obtains at least one internal motion parameter indicator and a corresponding internal time stamp based on the internal time at the automotive control unit whose internal time is to be synchronized with one or more further entities, such as any one of automotive control units $110_1$ - $110_5$. That is, in step 410 method 400 obtains one or more indicators of the motion parameter of vehicle 100 observed at a point in time based on the internal time by the automotive control unit whose internal time is to be synchronized. The observation of the motion parameter of vehicle 100 by the automotive control unit may also be made relative to the corresponding motion parameter of one or more further entities, in which case the at least one internal motion parameter indicator may include an internal relative motion parameter indicator. The indicator and the point in time of observation are subsequently used by method 400 as the first of two points of comparison during the determination of the time offset.

To obtain the at least one internal motion parameter indicator and the corresponding internal time stamp in step 410, step 410 may include any one of steps 411 to 412a. For example, if the automotive control unit whose internal time is to be synchronized includes an IMU, method 400 may in step 411 obtain the control unit IMD from the control unit IMU. In this example, the corresponding internal time stamp may be indicative of a capture time of the control unit IMD according to the internal time. Further, since the internal motion parameter indicator obtained in step 410 may be a relative internal motion parameter indicator, method 400 may in step 412 obtain an internal relative motion parameter indicator at a corresponding internal time stamp. Step 412 may include step 412a, in which method 400 may measure the motion parameter of vehicle 100 relative to the motion parameter of the further vehicle 200 at a measurement time according to the internal time with the measurement time being included in the corresponding internal time stamp.

In step 420, method 400 obtains one or more further motion parameter indicators and corresponding one or more further time stamps from one or more further entities. As discussed above, the further entities may be other devices within vehicle 100, such as automotive control units $110_1$ to $110_5$, or automotive sensors 101, into which any one of automotive control units $110_1$ to $110_5$ may be integrated. In such a case, method 400 may be used to perform intra vehicle time synchronization. Accordingly, method 400 may in step 420 obtain one or more indicators of the motion parameter of vehicle 100 observed at a point in time based on corresponding further times by one or more further entities within vehicle 100. The further entities may additionally or instead be one or more further vehicles 200 and/or one or more data sources 300. In such a case, method 400 may be used to perform inter vehicle time synchronization. Accordingly, method 400 may in step 420 obtain one or more indicators of the motion parameter of vehicle 100 observed at a point in time based on corresponding further times by one or more further entities outside of vehicle 100. The observation of the motion parameter of vehicle 100 by the one or more further entities may also be made relative to the corresponding motion parameter of the one or more further entities, in which case the further motion parameter indicators may include further relative motion parameter indicators. Further, if method 400 obtains relative internal motion parameter indicators in step 410, method 400 may in step 420 in addition or instead obtain one or more indicators of the corresponding motion parameter of a given further entity observed at a point in time based on corresponding further times by one or more further entities outside of vehicle 100. In both cases of time synchronization, method 400 thus obtains in step 420 the second of the two points of comparison during the determination of the time offset, i.e. one or more observations of the motion parameter of vehicle 100 and/or of the corresponding motion parameter of one or more further entities at corresponding points in time.

To obtain the one or more further motion parameter indicators and the corresponding one or more further time stamps in step 420, step 420 may include any one of steps 421 to 423b. For example, if any one of the one or more further entities includes a further IMU, method 400 may in step 421 obtain sensor IMD from each further IMU, with the corresponding one or more further time stamps including a further IMD capture time stamp indicative of a capture time of the further IMD according to the further time of the corresponding further entity. If any one of the further entities is a data source 300, method 400 may in step 422 derive one of the one or more further motion parameter indicators from the communication data. As discussed above, method 400 may derive one or more further motion parameter indicators as indicative of the motion parameter of vehicle 100 from the communication data e.g. based on the Doppler effect or any other means of signal processing to derive the motion parameter of vehicle 100 from the communication data received by the automotive control unit whose internal time is to be synchronized. Further, since the one or more further motion parameter indicators obtained in step 420 may include one or more further motion parameter indicators, method 400 may obtain in step 423 a further relative motion parameter indicator and a corresponding further time stamp based on the further vehicle time. To this end, method 400 may in step 423a receive a further motion parameter indicator indicative of the motion parameter of further vehicle 200 and a corresponding further vehicle time stamp as one of the one or more further time stamps from further vehicle 200 and may in step 423b calculate the further relative motion parameter indicator based on the received further motion parameter indicator and the at least one internal motion parameter indicator.

It will be understood that there may be more points of comparison than the two points of comparison mentioned in the discussion of steps 410 and 420. That is, the numbering of the two points of comparison is used to refer to the internally observed motion parameter indicators at the internal time stamps as the first point of comparison and the corresponding motion parameter indicators observed by the one or more further entities at the further time stamps as the second point of comparison. If in an intra vehicle time synchronization example, the automotive control unit whose internal time is to be synchronized, such as automotive control unit $110_1$, obtains one internal motion parameter indicator and four further motion parameter indicators from automotive control units $110_2$ to $110_5$, four comparisons are subsequently made, in which each of the four further motion parameter indicators from automotive control units $110_2$ to $110_5$ serves as the second point of comparison.

In step 430, method 400 determines one or more time offsets between the internal time stamp and the one or more further time stamps based on the at least one internal motion parameter indicator and the one or more further motion parameter indicators. That is, in step 430 method 400 determines when each of the one or more internal motion parameter indicators, i.e. each of the first points of comparison, is approximately similar to each of the one or more further motion parameter indicators, i.e. each of the second points of comparison. Since all motion parameter indicators, i.e. both the internal and the further ones, have a corresponding time stamp based on the corresponding internal time or further time, respectively, the one or more time offsets may accordingly be determined as the time difference between corresponding time stamps of an internal motion parameter indicator and a further motion parameter indicator determined to be approximately similar.

It will be understood that the expression "approximately similar" is to be construed as a given further motion parameter indicator being indicative of a value of the corresponding motion parameter within a pre-determined value range around the value of the motion parameter of vehicle 100 indicated either directly or relative to the corresponding motion parameter of the corresponding further entity by the internal motion parameter indicator to which the given further motion parameter indicator is compared to. The pre-determined value range may for example be determined as a percentage of the value of the motion parameter of vehicle 100 as indicated by each internal motion parameter indicator. That is, the given further motion parameter indicator may be considered approximately similar if its value falls within a percentage range of the value of the internal motion parameter indicator. Taking acceleration of the motion parameter as an example, if the percentage range is defined as a deviation of 5% and a given internal motion parameter indicator is indicative of an acceleration of $3\frac{m}{s^2}$ any further motion parameter indicator indicative of an acceleration between $2.85\frac{m}{s^2}$ and $3.15\frac{m}{s^2}$ may be considered approximately similar.

It will be understood that an internal motion parameter indicator and a further motion parameter may also be considered approximately similar in other ways. If for example both indicators are 6DoF signals or some other type of signal indicative of the motion parameter of vehicle 100, they may be considered approximately similar if they can be correlated e.g. within a given time window or based on a Fourier Transform. In such examples, any shift required to correlate the signals may be considered the time offset between the internal time and the further time of the corresponding further entity.

In step 440, method 400 synchronizes the internal time with the one or more further times based on the one or more time offsets. Method 400 may synchronize the internal time in any manner suitable to align the internal time of the automotive control unit whose internal time is to be synchronized with one or more further times of further entities, i.e. by reducing the corresponding time offsets determined in step 430. For example, method 400 may shift the internal time to the further time of a further entity, e.g. if the further entity is data source 300. If the internal time is to be synchronized with multiple further entities, method 400 may determine an average time offset based on the time offsets determined in step 430 and shift the internal time accordingly. Instead of shifting the internal time to the further time of a further entity or by an average time offset, method 400 may also in step 440 cause one or more further entities to shift their further times based on these principles. Method 400 may for example cause one or more further entities to shift their further times based on these principles if the automotive control unit is configured to fuse sensor data of multiple automotive sensor data or to generate environmental awareness for a driving automation system feature in the sense of standard J3016 of SAE International. That is, in such examples of the present disclosure, the automotive sensor data of multiple automotive sensors 101 need to be aligned in the time domain, which may be achieved by causing all automotive sensors 101 to shift their further times to the internal time if they are deemed to deviate from the internal time. The same may be achieved by shifting the further times of automotive sensors 101 and the internal time by the average time offset in opposite directions.

In summary, method 100 compares one or more internal motion parameter indicators, which are indicative of a motion parameter of vehicle 100, to one or more further vehicle motion parameter indicators, which in the case of intra vehicle time synchronization are indicative of the motion parameter of vehicle 100 or which in the case of inter vehicle time synchronization are indicative or the motion parameter of vehicle 100, a corresponding motion parameter of one or more further vehicles 200 or both. Since all motion parameter indicators are associated with corresponding time stamps indicative of the point in time at which they were captured, the time offset may then be determined as the time difference between two time stamps of motion parameter indicators deemed approximately similar. Intra vehicle time synchronization may e.g. be used for sensor fusion, i.e. in order to ensure that automotive sensor data captured by various automotive sensors 101 is aligned in the time domain. Inter vehicle time synchronization may e.g. be used in V2V or V2X communication in order to ensure that vehicle 100, further vehicle 200, data sources 300 and any other communication participants are aligned in the time domain.

Fig. 4 shows automotive control unit 110 configured to perform method 400, which may also be referred to as an electronic control unit (ECU). Automotive control unit 110 may include a processor 111, a graphics processing unit (GPU) 112, automotive processing system 113, a memory 114, a removable storage 115, a storage 116, a cellular interface 117, a global navigation satellite system (GNSS) interface 118, a communication interface 119 and IMU 120.

Processor 111 may be any kind of single-core or multi-core processing unit employing a reduced instruction set (RISC) or a complex instruction set (CISC).

Exemplary RISC processing units include ARM based cores or RISC V based cores. Exemplary CISC processing units include x86 based cores or x86-64 based cores. Processor 111 may perform instructions causing automotive control unit 110 to perform method 400. Processor 111 may be directly coupled to any of the components of automotive control unit 110 or may be directly coupled to memory 114, GPU 112 and device bus 110B.

GPU 112 may be any kind of processing unit optimized for processing graphics related instructions or more generally for parallel processing of instructions. As such, GPU 112 may be configured to generate a display of information, such as information relating to one or more driving automation system features or telemetry data, to a driver of the vehicle, e.g. via a head-up display (HUD) or a display arranged within the view of the driver. GPU 112 may be coupled to the HUD and/or the display via connection 112C. GPU 112 may further perform at least a part of method 400 to enable fast parallel processing of instructions relating to method 400. It should be noted that in some embodiments, processor 111 may determine that GPU 112 need not perform instructions relating to method 400. GPU 112 may be directly coupled to any of the components of automotive control unit 110 or may be directly coupled to processor 111 and memory 114. In some embodiments, GPU 112 may also be coupled to the device bus.

Automotive processing system 113 may be any kind of system-on chip configured to provide trillions of operations per second (TOPS) e.g. in order to enable automotive control unit 110 to perform one or more driving automation system features while driving. Automotive processing system 113 may only interface with processor 111 or may interface with other devices via the system bus.

Memory 114 may be any kind of fast storage enabling processor 111, GPU 112 and automotive processing system 113 to store instructions for fast retrieval during processing of instructions as well as to cache and buffer data. Memory 114 may be a unified memory coupled to processor 111 and GPU 112 and automotive processing system 113 in order to enable allocation of memory 114 to processor 111, GPU 112 and automotive processing system 110 as needed. Alternatively, processor 111, GPU 112 and automotive processing system 113 may be coupled to separate processor memory 114a, GPU memory 114b and automotive processing system memory 114c.

Removable storage 115 may be a storage device which can be removably coupled with automotive control unit 110. Examples include a digital versatile disc (DVD), a compact disc (CD), a Universal Serial Bus (USB) storage device, such as an external SSD, or a magnetic tape. It should be noted that removable storage 115 may store data, such as instructions of method 400 and/internal as well as further motion parameter indicators and associated time stamps or may be omitted.

Storage 116 may be a storage device enabling storage of program instructions and other data. For example, storage 116 may be a hard disk drive (HDD), a solid state disk (SSD) or some other type of nonvolatile memory. Storage 116 may for example store the instructions of method 400.

Removable Storage 115 and storage 116 may be coupled to processor 111 via system bus 110B. System bus 110B may be any kind of bus system enabling processor 111 and optionally GPU 112 as well as automotive processing system 113 to communicate with the other devices of automotive control unit 110. The system bus may for example be a Peripheral Component Interconnect express (PCIe) bus or a Serial AT Attachment (SATA) bus.

Cellular interface 117 may be any kind of interface enabling automotive control unit 110 to communicate via a cellular network, such as a 4G network or a 5G network.

GNSS interface 118 may be any kind of interface enabling automotive control unit 110 to receive position data provided by a satellite network, such as the Global Positioning System (GPS), the Global Navigation Satellite System (GLONASS) or Galileo.

Communications interface 119 may enable automotive control unit 110 to interface with external devices, either directly or via network, via a connection as illustrated by the line coupling communications interface 119 to the outside of automotive control unit 110. Communications interface 119 may for example enable automotive control unit 110 to couple to a wired or wireless network, such as Ethernet, Wifi, a Controller Area Network (CAN) bus or any bus system appropriate in vehicles. For example, automotive control unit 110 may be coupled to one or more further automotive control units $110_1$-$110_5$, further vehicles 200 and/or data sources via communications interface 119. Communications interface 119 may also include a USB port or a serial port to enable direct communication with an external device.

IMU 120 may include one or more accelerometers and/or gyroscopes. With these elements, IMU 120 may be configured to capture a specific force, angular rate, and/or the orientation of automotive control units 110. The data captured by each IMU may be referred to as inertial measurement data (IMD), which may e.g. be a 6 degrees of freedom (DoF), as discussed above.

Automotive control unit 110 may be integrated with vehicle 100, e.g. beneath the cabin, under the dashboard or in the trunk of vehicle 100.

It will be understood that automotive control unit 110 may include further or fewer elements than shown in Fig. 4, as required by the actual implementation of automotive control unit 110. Further, the above discussed elements may be distributed across multiple (sub) units.

The method may further be illustrated by the following examples.

An example method for synchronizing an internal time of an automotive control unit in a vehicle with one or more further times of one or more further entities, comprises obtaining, at the automotive control unit, at least one internal motion parameter indicator and a corresponding internal time stamp based on the internal time, each internal motion parameter indicator being indicative of a motion parameter of the vehicle, obtaining, from one or more of the one or more further entities, one or more further motion parameter indicators and corresponding one or more further time stamps, wherein each further motion parameter indicator is indicative of the motion parameter of the vehicle and/or a corresponding motion parameter of at least one of the one or more further entities and wherein each further time stamp is based on a corresponding one of the one or more further times, determining one or more time offsets between the internal time stamp and the one or more further time stamps based on the at least one internal motion parameter indicator and the one or more further motion parameter indicators; and synchronizing the internal time with the one or more further times based on the one or more time offsets.

In the example, the motion parameter of the vehicle and the motion parameter of the at least one of the one or more further entities may be an acceleration.

In the example, the one or more further entities may include at least one of an automotive sensor of the vehicle, a further vehicle and a data source.

In the example, the data source may be one of a data server, a global navigation satellite system (GNSS) and an access node of a mobile communications network.

In the example, the automotive control unit may include a control unit inertial measurement unit (IMU) configured to capture control unit inertial measurement data (IMD) including the at least one internal motion parameter indicator, and the obtaining of the at least one internal motion parameter indicator may include obtaining, from the control unit IMU, the control unit IMD, wherein the corresponding internal time stamp may be indicative of a capture time of the control unit IMD according to the internal time.

In the example, at least one of the one or more further entities may include a further inertial measurement unit (IMU) configured to capture further inertial measurement data (IMD) including one of the one or more further motion parameter indicators, and the obtaining of the one or more further motion parameter indicators includes obtaining, from each further IMU, the further IMD, wherein the corresponding one or more further time stamps include a further IMD capture time stamp indicative of a capture time of the further IMD according to the sensor time.

In the example, at least one of the one or more further entities may be a data source, the data source being configured to provide communication data to the vehicle with a corresponding data source time stamp according to a data source time, the corresponding one or more further time stamps may include the data source time stamp, and obtaining the one or more further motion parameter indicators may include deriving, from the communication data and the corresponding data source time stamp, one of the one or more further motion parameter indicators.

In the example, at least one of the one or more further entities may be a further vehicle having a further vehicle time, the obtaining the at least one internal motion parameter indicator may include obtaining an internal relative motion parameter indicator at a corresponding internal time stamp, the internal relative motion parameter indicator being indicative of the motion parameter of the vehicle relative to the motion parameter of the further vehicle, and the obtaining the one or more further motion parameter indicators may include obtaining a further relative motion parameter indicator and a corresponding further time stamp based on the further vehicle time, the further relative motion parameter indicator being indicative of the motion parameter of the vehicle relative to the motion parameter of the further vehicle.

In the example, the obtaining the internal relative motion parameter indicator includes measuring the motion parameter of the vehicle relative to the motion parameter of the further vehicle at a measurement time according to the internal time, the measurement time being included in the corresponding internal time stamp, and the obtaining the further relative motion parameter may include receiving, from the further vehicle, a further motion parameter indicator indicative of the motion parameter of the further vehicle and a corresponding further vehicle time stamp as one of the one or more further time stamps, and calculating the further relative motion parameter based on the further motion parameter indicator and the motion parameter of the vehicle measured upon reception of the further vehicle motion parameter indicator.

In the example, the automotive control unit may include a control unit inertial measurement unit (IMU) configured to capture control unit inertial measurement data (IMD), the further vehicle may include a further vehicle inertial measurement unit (IMU) configured to capture further vehicle inertial measurement data (IMD), and the obtaining the internal relative motion parameter indicator and the obtaining the further relative motion parameter indicator may respectively be based on the control unit IMD and the further vehicle IMD.

An example automotive control unit comprises at least one processing unit and a memory coupled to the at least one processing unit and configured to store machine-readable instructions. The machine-readable instructions cause the at least one processing unit to: obtain, at the automotive control unit, at least one internal motion parameter indicator and a corresponding internal time stamp based on the internal time, each internal motion parameter indicator being indicative of a motion parameter of the vehicle, obtain, from one or more of the one or more further entities, one or more further motion parameter indicators and corresponding one or more further time stamps, wherein each further motion parameter indicator is indicative of the motion parameter of the vehicle and/or a corresponding motion parameter of at least one of the one or more further entities and wherein each further time stamp is based on a corresponding one of the one or more further times, determine one or more time offsets between the internal time stamp and the one or more further time stamps based on the one or more internal motion parameter indicators and the one or more further motion parameter indicators, and synchronize the internal time with the one or more further times based on the one or more time offsets.

In the example, the machine-readable instructions further may cause the at least one processing unit to perform the method of any one of the above examples.

An example vehicle may comprise the automotive control unit of any one of the example automotive control unit.

The preceding description has been provided to illustrate a method and system for synchronizing an internal time of a vehicle with times of further entities. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

## List of Reference Signs

| | |
|---|---|
| 100 | vehicle |
| 101 | automotive sensor |
| 110 | automotive control unit |
| 110B | bus |
| 111 | CPU |
| 112 | GPU |
| 112c | connection |
| 113 | automotive processing system |
| 114 | memory |
| 115 | removable storage |
| 116 | storage |
| 117 | cellular interface |
| 118 | GNSS interface |
| 119 | communications interface |
| 120 | Inertial Measurement Unit (IMU) |
| 200 | further vehicle |
| 300 | data source |
| 310 | global navigation satellite system (GNSS) |
| 320 | access node |
| 330 | data server |
| 400 | method |
| 410-440 | method steps |
| $T_{X10/x}$ | internal time of automotive control unit $X10_x$ |
| $T_{200}$ | further vehicle time |
| $T_{3X0}$ | data source time |

## Claims

1. Method (400) for synchronizing an internal time of an automotive control unit ($110_1$ - $110_5$) in a vehicle (100) with one or more further times of one or more further entities ($110_1$ - $110_5$, 200, 300 - 330), comprising:

    obtaining (410), at the automotive control unit ($110_1$ - $110_5$), at least one internal motion parameter indicator and a corresponding internal time stamp based on the internal time, each internal motion parameter indicator being indicative of a motion parameter of the vehicle;
    obtaining (420), from one or more of the one or more further entities ($110_1$ - $110_5$, 200, 300 - 330), one or more further motion parameter indicators and corresponding one or more further time stamps, wherein each further motion parameter indicator is indicative of the motion parameter of the vehicle and/or a corresponding motion parameter of at least one of the one or more further entities and wherein each further time stamp is based on a corresponding one of the one or more further times;
    determining (430) one or more time offsets between the internal time stamp and the one or more further time stamps based on the at least one internal motion parameter indicator and the one or more further motion parameter indicators; and
    synchronizing (440) the internal time with the one or more further times based on the one or more time offsets.

2. The method (400) of claim 1, wherein the motion parameter of the vehicle (100) and the motion parameter of the at least one of the one or more further entities ($110_1$ - $110_5$, 200, 300 - 330) is an acceleration.

3. The method (400) of any one of the preceding claims, wherein the one or more further entities ($110_1$ - $110_5$, 200, 300 - 330), include at least one of an automotive sensor (101) of the vehicle (100), a further vehicle (200) and a data source (300).

4. The method (400) of claim 3, wherein the data source (300) is one of a data server (330), a global navigation satellite system -GNSS- (310) and an access node (320) of a mobile communications network.

5. The method (400) of any one of the preceding claims, wherein:

    the automotive control unit ($110_1$ - $110_5$) includes a control unit inertial measurement unit -IMU-(120) configured to capture control unit inertial measurement data -IMD- including the at least one internal motion parameter indicator, and
    the obtaining (410) of the at least one internal motion parameter indicator includes obtaining, (411) from the control unit IMU (120), the control unit IMD, wherein the corresponding internal time stamp is indicative of a capture time of the control unit IMD according to the internal time.

6. The method (400) of claim 5, wherein:

    at least one of the one or more further entities ($110_1$ - $110_5$, 200, 300 - 330) includes a further inertial measurement unit -IMU- (120) configured to capture further inertial measurement data -IMD-including one of the one or more further motion parameter indicators, and
    the obtaining (420) of the one or more further motion parameter indicators includes obtaining (421), from each further IMU, the further IMD, wherein the corresponding one or more further time stamps include a further IMD capture time stamp indicative of a capture time of the further IMD according to the further time.

7. The method (400) of any one of the preceding claims, wherein:

    at least one of the one or more further entities is a data source (300-330), the data source being configured to provide communication data to the vehicle with a corresponding data source time stamp according to a data source time,
    the corresponding one or more further time stamps include the data source time stamp, and
    obtaining (420) the one or more further motion parameter indicators includes deriving (422), from the communication data, one of the one or more further motion parameter indicators.

8. The method (400) of any one of the preceding claims, wherein:

    at least one of the one or more further entities is a further vehicle (200) having a further vehicle time,
    the obtaining (410) the at least one internal motion parameter indicator includes obtaining (412) an internal relative motion parameter indicator at a corresponding internal time stamp, the internal relative motion parameter indicator being indicative of the motion parameter of the vehicle (100) relative to the motion parameter of the further vehicle (200); and
    the obtaining (420) the one or more further motion parameter indicators includes obtaining (423) a further relative motion parameter indicator and a corresponding further time stamp based on the further vehicle time, the further relative motion parameter indicator being indicative of the motion parameter of the vehicle (100) relative to the motion parameter of the further vehicle (200).

9. The method (400) of claim 8, wherein:

the obtaining (412) the internal relative motion parameter indicator includes measuring (412a) the motion parameter of the vehicle (100) relative to the motion parameter of the further vehicle (200) at a measurement time according to the internal time, the measurement time being included in the corresponding internal time stamp; and
the obtaining (423) the further relative motion parameter includes:

receiving (423a), from the further vehicle (200), a further motion parameter indicator indicative of the motion parameter of the further vehicle (200) and a corresponding further vehicle time stamp as one of the one or more further time stamps; and
calculating (423b) the further relative motion parameter indicator based on the received further motion parameter indicator and the at least one internal motion parameter.

10. The method (400) of any one of claims 8 and 9, wherein:

the automotive control unit ($110_1$ - $110_5$) includes a control unit inertial measurement unit -IMU-(120) configured to capture control unit inertial measurement data -IMD-,
the further vehicle (200) includes a further vehicle inertial measurement unit -IMU- (120) configured to capture further vehicle inertial measurement data -IMD-, and
the obtaining (412) the internal relative motion parameter indicator and the obtaining (423) the further relative motion parameter indicator are respectively based on the control unit IMD and the further vehicle IMD.

11. An automotive control unit ($110_1$-$110_5$), comprising:

at least one processing unit (111, 112, 113); and
a memory (115, 116) coupled to the at least one processing unit (111, 112, 113) and configured to store machine-readable instructions, wherein the machine-readable instructions cause the at least one processing unit (111, 112, 113) to:

obtain, at the automotive control unit ($110_1$ - $110_5$), at least one internal motion parameter indicator and a corresponding internal time stamp based on the internal time, each internal motion parameter indicator being at least indicative of a motion parameter of the vehicle (100);
obtain, from one or more of the one or more further entities ($110_1$ - $110_5$, 200, 300-330) one or more further motion parameter indicators and corresponding one or more further time stamps, wherein each further motion parameter indicator is indicative of the motion parameter of the vehicle (100) and/or a corresponding motion parameter of at least one of the one or more further entities ($110_1$ - $110_5$, 200, 300-330) and wherein each further time stamp is based on a corresponding one of the one or more further times;
determine one or more time offsets between the internal time stamp and the one or more further time stamps based on the one or more internal motion parameter indicators and the one or more further motion parameter indicators; and
synchronize the internal time with the one or more further times based on the one or more time offsets.

12. The automotive control unit ($110_1$-$110_5$) of claim 11, wherein the machine-readable instructions further cause the at least one processing unit (111, 112, 113) to perform the method of any one of claims 2 to 10.

13. A vehicle (100) comprising the automotive control unit ($110_1$-$110_5$) of any one of claims 12 and 13.

Fig. 1

400

obtaining, at the automotive control unit, at least one internal motion parameter indicator and a corresponding internal time stamp based on the internal time

411

obtaining, from the control unit IMU, the control unit IMD

410

412

obtaining an internal relative motion parameter indicator at a corresponding internal time stamp

412a

measuring the motion parameter of the vehicle relative to the motion parameter of the further vehicle at a measurement time according to the internal time

obtaining, from one or more of the one or more further entities, one or more further motion parameter indicators and corresponding one or more further time stamps

421

obtaining, from each further IMU, the further IMD

422

deriving, from the communication data and the corresponding data source time stamp, one of the one or more further motion parameter indicators

420

423

obtaining a further relative motion parameter indicator and a corresponding further time stamp

423a

receiving, from the further vehicle, a further motion parameter indicator and a corresponding further vehicle stamp

423b

calculating the further relative motion parameter

430

determining one or more time offsets between the internal time stamp and the one or more further time stamps

440

synchronizing the internal time with the one or more further times based on the one or more time offsets

Fig. 2

Fig. 3

Fig. 4

Europäisches
Patentamt
European
Patent Office
Office européen
des brevets

# EUROPEAN SEARCH REPORT

Application Number

EP 25 15 0703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIU KEJIE ET AL: "Real-Time Temporal and Rotational Calibration of Heterogeneous Sensors Using Motion Correlation Analysis", IEEE TRANSACTIONS ON ROBOTICS, IEEE SERVICE CENTER, PISCATAWAY, NJ, US, vol. 37, no. 2, 25 November 2020 (2020-11-25), pages 587-602, XP011847727, ISSN: 1552-3098, DOI: 10.1109/TRO.2020.3033698 [retrieved on 2021-04-02] * abstract; figures 1-5 * * page 587, right-hand column, paragraph 2 * * page 589, left-hand column, paragraph 1 - page 591, right-hand column, paragraph 2 * * page 594, right-hand column, paragraph 2 * ----- | 1-7, 11-13 | INV. H04J3/06 H04L12/40 H04Q9/00 ADD. H04W56/00 B60W50/00 |
| X | US 2022/365168 A1 (AMIZUR YUVAL [IL] ET AL) 17 November 2022 (2022-11-17) * abstract; figures 3-8 * * paragraph [0046] - paragraph [0049] * * paragraphs [0057], [0080], [0081], [0083], [0085] * * paragraphs [0128], [0129] * ----- -/-- | 1-13 | TECHNICAL FIELDS SEARCHED (IPC) H04J H04L H04Q H04W G01C B60W G01S |

The present search report has been drawn up for all claims

| Place of search | Date of completion of the search | Examiner |
|---|---|---|
| The Hague | 16 June 2025 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches
Patentamt

European
Patent Office

Office européen
des brevets

# EUROPEAN SEARCH REPORT

**Application Number**

EP 25 15 0703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAR-SHALOM OFER ET AL: "Accurate Time Synchronization for Automotive Cooperative Radar (CoRD) Applications", 2020 IEEE INTERNATIONAL RADAR CONFERENCE (RADAR), IEEE, 28 April 2020 (2020-04-28), pages 500-505, XP033779816, DOI: 10.1109/RADAR42522.2020.9114861 [retrieved on 2020-06-10] * page 501, left-hand column, paragraph 2 - page 504, left-hand column, paragraph 2 * ----- | 1-13 | |

TECHNICAL FIELDS
SEARCHED        (IPC)

The present search report has been drawn up for all claims

| Place of search | Date of completion of the search | Examiner |
|---|---|---|
| The Hague | 16 June 2025 | Pieper, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 0703

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2025

| Patent document cited in search report | Publication date | Patent family member(s) | | Publication date |
|---|---|---|---|---|
| US 2022365168 A1 | 17-11-2022 | EP | 4052063 A1 | 07-09-2022 |
| | | US | 2022365168 A1 | 17-11-2022 |
| | | WO | 2021086525 A1 | 06-05-2021 |

EPO FORM P0459

For more details about this annex : see Official Journal of the European Patent Office, No. 12/82